# EUROPEAN PATENT APPLICATION

(11) **EP 3 561 963 A1**
(43) Date of publication of application: **30.10.2019**
(21) Application number: 17883270.5
(22) Date of filing: 18.12.2017
(51) Int. Cl.: H01R 13/52, B60K 1/04, B60K 15/05, B60L 11/18, B60R 16/04, E05B 83/34

(54) **CAP OPENING AND CLOSING STRUCTURE AND CONNECTOR FOR CHARGING**

(30) Priority: 20.12.2016 JP 2016247166
(71) Applicant: Yazaki Corporation, Minato-ku Tokyo 108-8333 (JP)
(72) Inventor: SAWADA, Tsutomu, Kakegawa-shi Shizuoka 437-1421 (JP); MORIGUCHI, Hiroshi, Kakegawa-shi Shizuoka 437-1421 (JP); KITAMURA, Hidetaka, Kakegawa-shi Shizuoka 437-1421 (JP); AOSHIMA, Shinsuke, Fujieda-shi Shizuoka 426-0034 (JP)
(74) Representative: Grünecker Patent- und Rechtsanwälte PartG mbB
(86) International application number: PCT/JP2017/045373
(87) International publication number: WO 2018/117042

(57) **Abstract**

A cap opening and closing structure 1A is configured such that a surface 48 of an inlet damper 42A in a rotation axis direction and a side surface 30A of a first supporting unit 26A keep facing each other while the cap 4 rotates. The surface 48 is provided with a convex portion 44A, and the side surface 30A is provided with a concave portion 29A, and the convex portion 44A and the concave portion 29A are engaged with each other in an open position. An inlet damper spring 43A biases the convex portion 44A so as to engage with the concave portion 29A in the open position and to contact the facing side surface 30A in a non-engagement state between the convex portion 44A and the concave portion 29A. Two inclined surfaces 441 of the convex portion 44A facing each other in a rotation direction contact respective ends 292A of the concave portion 29A in the open position.

## Description

### Field

The present invention relates to a cap opening and closing structure and a charging connector.

### Background

Conventional vehicle charging connectors having an openable and closable cap provided in a manner covering a connection part connected with a charging connector are used for vehicles such as an electric vehicle (EV) and a plug-in hybrid electric vehicle (PHEV). In such vehicle charging connectors, a biasing member such as a spring biases the cap toward a direction opening the cap. The cap is locked to a housing when the cap is in a closed state on the housing against a pressing (biasing) force of the spring. When an operator releases the lock, the cap is opened by the pressing force of the biasing member.

In the vehicle charging connectors, the setting of an excessively large pressing force for pressing the cap causes the cap to burst open, which may decrease the durability of the cap and the opening and closing structure of the cap. To overcome the problem, an opening and closing structure making a smoother motion of the cap has been developed (for example, see Patent Literature 1-4). Citation List

### Patent Literature

Patent Literature 1: Japanese Patent Application Laid-open No. 2015-115123
Patent Literature 2: Japanese Patent Application Laid-open No. 2012-221611
Patent Literature 3: Japanese Patent Application Laid-open No. 2012-18838
Patent Literature 4: Japanese Patent Application Laid-open No. 2012-15058

### Summary

### Technical Problem

In the vehicle charging connectors described in Patent Literature 1-4, force for opening the cap can be controlled without using an expensive rotary oil dumper, however, the vehicle charging connectors have complicated structures for opening the cap in a smooth motion and therefore need to be further improved.

An object of the present invention is to provide an opening and closing structure of a cap and a charging connector capable of relieving a force for opening the cap and preventing the cap from fluttering when completely opened in simple configurations.

### Solution to Problem

In order to achieve the above mentioned object, a cap opening and closing structure according to the present invention includes a housing that is provided with a connection part electrically connected with a connection object outside a vehicle through an opening, a cap that is rotatably supported with respect to the housing in a rotation supporting section provided at an end, closes the opening in a closed position, and exposes the connection part outside the vehicle through the opening in an open position, a first biasing member that biases the cap such that the cap rotates around a rotation axis heading to the open position from the closed position, a pair of a first facing surface and a second facing surface that are formed on the housing and the cap, respectively, and keep facing each other while the cap rotates, a first engagement portion and a second engagement portion that are provided on the first facing surface and the second facing surface, respectively, and a second biasing member that biases one of the first engagement portion and the second engagement portion in an engagement direction where the one engagement portion and the other engagement portion are capable of being engaged with each other in the open position, wherein one of the first engagement portion and the second engagement portion has a convex portion, and the other engagement portion has a concave portion with which the convex portion is engaged by the second biasing member in the open position, at least one of the convex portion and the concave portion has two inclined surfaces facing each other in a rotation direction, and the two inclined surfaces are formed in a manner stretching in the engagement direction from closely located ends closely facing each other toward distanced ends distantly facing each other of the convex portion and the concave portion in the open position.

In the cap opening and closing structure, the two inclined surfaces may be formed such that the convex portion is engaged with the concave portion with the closely located ends kept in a non-contact state in the open position.

In the cap opening and closing structure, the first facing surface and the second facing surface may face each other in a rotation axis, one of the engagement portions may be movably supported with respect to the rotation supporting section in a rotation axis direction, and the second biasing member may be provided between one of the engagement portions and the rotation supporting section and may bias the one engagement portion toward the second facing surface side of the rotation axis direction.

In the cap opening and closing structure, the first facing surface and the second facing surface may face each other in a radius direction of the rotation supporting section, one of the engagement portions may be movably supported with respect to the rotation supporting section in the radius direction, and the second biasing member may be provided between one of the engagement portions and the rotation supporting section or the housing and may bias the one engagement portion toward the first facing surface side or the second facing surface side of the radius directions.

In the cap opening and closing structure, in a non-engagement state between the first engagement portion and the second engagement portion, the second biasing member may bring one of the engagement portions into contact with the facing surface facing the engagement portion.

In the cap opening and closing structure, the first facing surface and the second facing surface may be separated from each other in the radius direction of the rotation supporting section from the open position toward the closed position in the rotation direction.

In order to achieve the above mentioned object, a charging connector according to the present invention includes the cap opening and closing structure and a connection part electrically connected between the cap opening and closing structure and a charging connector outside a vehicle.

### Advantageous Effects of Invention

According to the present invention, the force for opening a cap is suitably controlled, and the cap is prevented from fluttering when completely opened.

### Brief Description of Drawings

FIG. 1 is a perspective view that illustrates a schematic configuration of a charging connector to which a cap opening and closing structure according to a first embodiment is adapted.
FIG. 2 is a side view that illustrates a schematic configuration of the charging connector to which the cap opening and closing structure according to the first embodiment is adapted.
FIG. 3 is an exploded perspective view that illustrates a schematic configuration of the cap opening and closing structure according to the first embodiment.
FIG. 4 is a side view that illustrates a schematic configuration of an inlet damper in the cap opening and closing structure according to the first embodiment.
FIG. 5 is a partial perspective view that illustrates a schematic configuration of an inlet damper supporting unit in the cap opening and closing structure according to the first embodiment.
FIG. 6 is a sectional view of FIG. 1 along A-A.
FIG. 7 is a partial sectional view that illustrates a schematic configuration of the cap opening and closing structure according to the first embodiment.
FIG. 8 is a partial sectional view that illustrates a schematic configuration of the cap opening and closing structure according to the first embodiment.
FIG. 9 is a schematic view that illustrates engagement operation between a convex portion and a concave portion in the cap opening and closing structure.
FIG. 10 is a schematic view that illustrates a schematic configuration of a cap opening and closing structure according to a second embodiment.
FIG. 11 is a schematic view that illustrates a schematic configuration of the cap opening and closing structure according to the second embodiment.
FIG. 12 is a side view that illustrates a schematic configuration of an inlet damper in the cap opening and closing structure according to the second embodiment.
FIG. 13 is a side view that illustrates a schematic configuration of a first supporting unit of a housing according to the second embodiment.
FIG. 14 is a schematic view that illustrates a schematic configuration of a cap opening and closing structure according to a third embodiment.
FIG. 15 is a schematic view that illustrates a schematic configuration of the cap opening and closing structure according to the third embodiment.
FIG. 16 is a schematic view that illustrates a schematic configuration of a cap opening and closing structure according to a fourth embodiment.
FIG. 17 is a schematic view that illustrates a schematic configuration of the cap opening and closing structure according to the fourth embodiment.
FIG. 18 is a schematic view that illustrates a schematic configuration of a cap opening and closing structure according to a first modification of the third embodiment.
FIG. 19 is a schematic view that illustrates a schematic configuration of the cap opening and closing structure according to the first modification of the third embodiment.
FIG. 20 is a schematic view that illustrates a schematic configuration of a cap opening and closing structure according to a second modification of the third embodiment.
FIG. 21 is a schematic view that illustrates a schematic configuration of the cap opening and closing structure according to the second modification of the third embodiment.
FIG. 22 is a schematic view that illustrates another example of engagement operation of a convex portion and a concave portion in the cap opening and closing structure.

### Description of Embodiments

Embodiments according to the present invention will now be described hereinafter in detail with reference to the drawings. It should be noted that the embodiments are not intended to limit the scope of the present invention. Components in the following embodiments include what the skilled person in the art could easily replace with and what are substantially the same. Various omissions, modifications, and changes can be made on the components in the embodiments without departing from the spirit of the present invention.

### First Embodiment

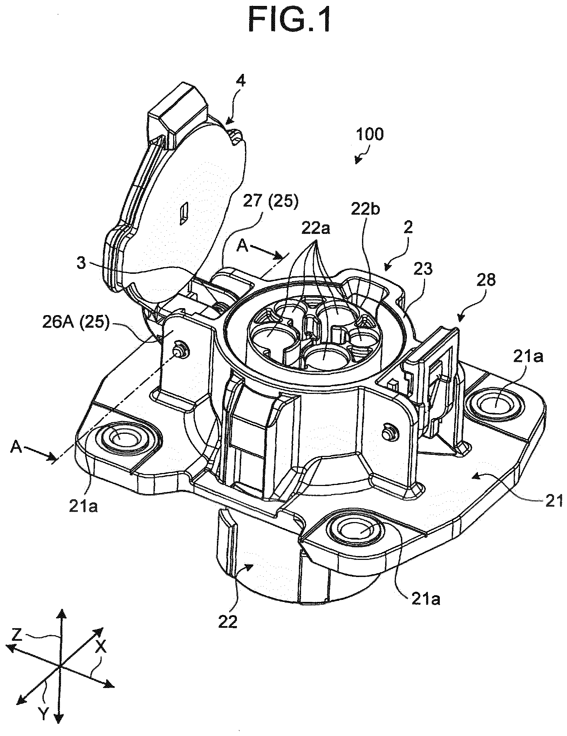

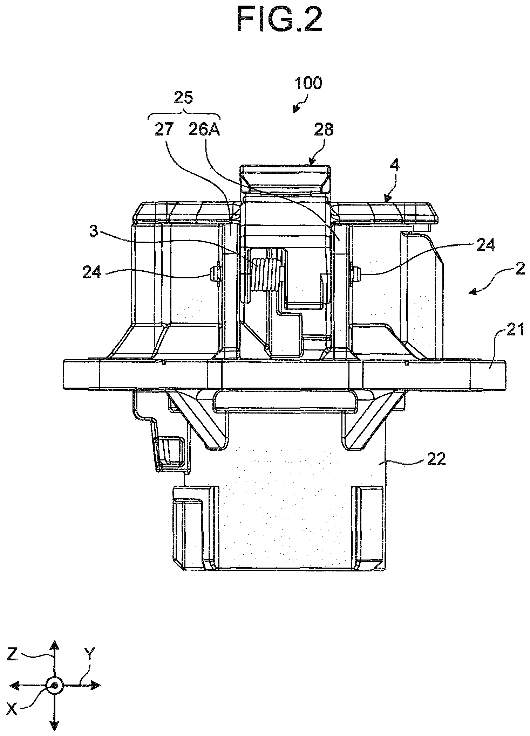

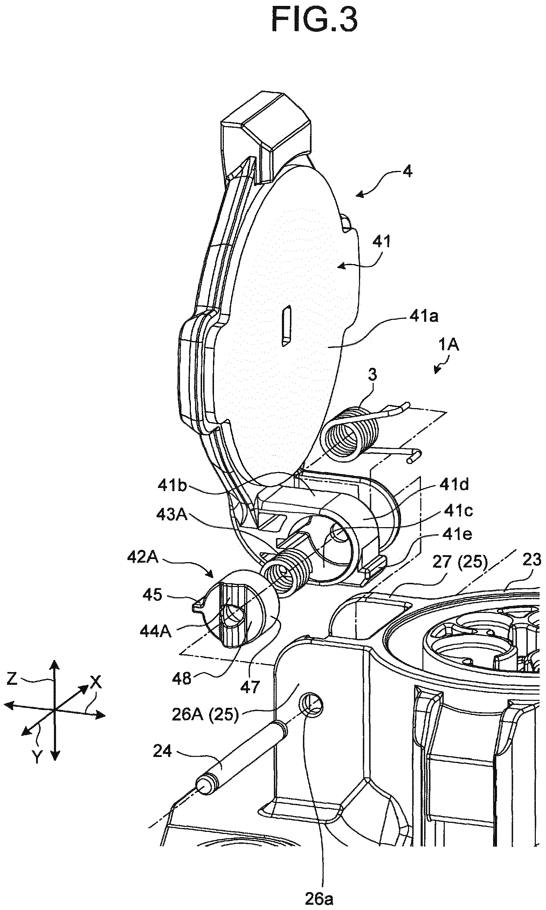

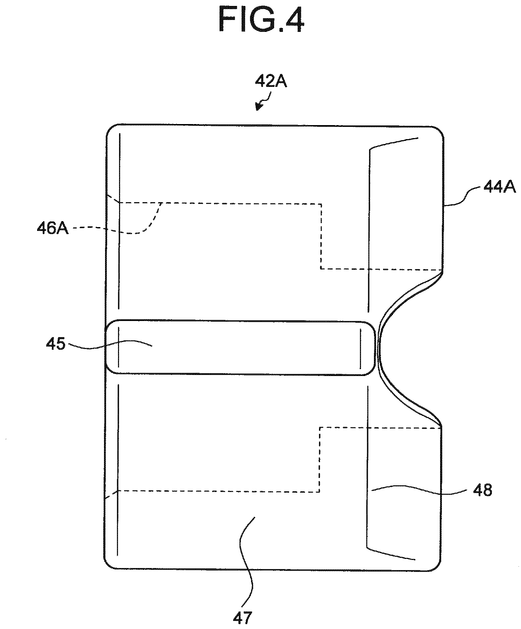

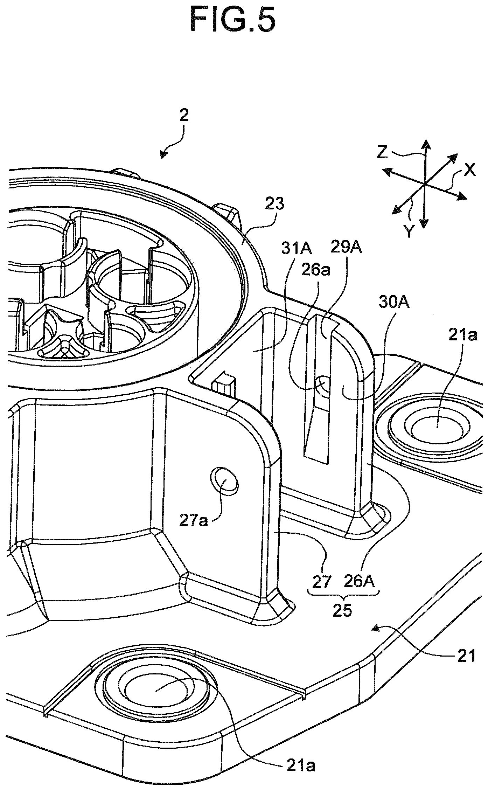

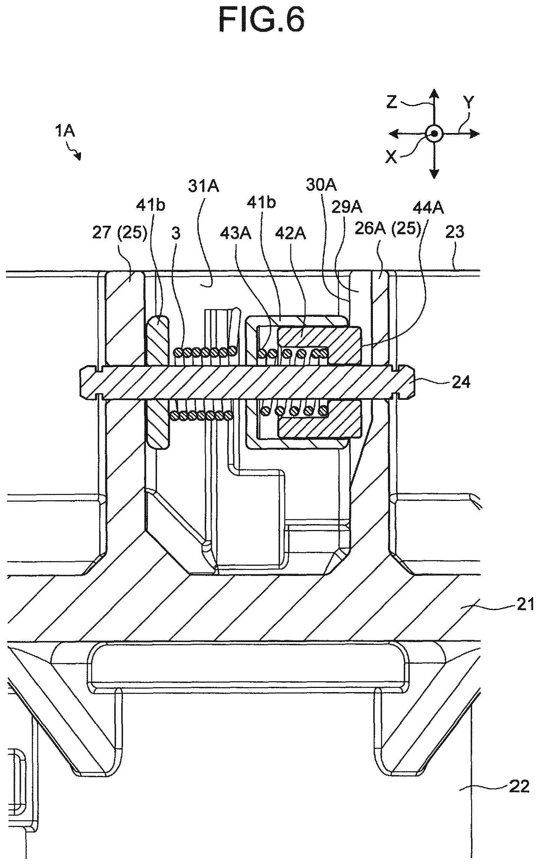

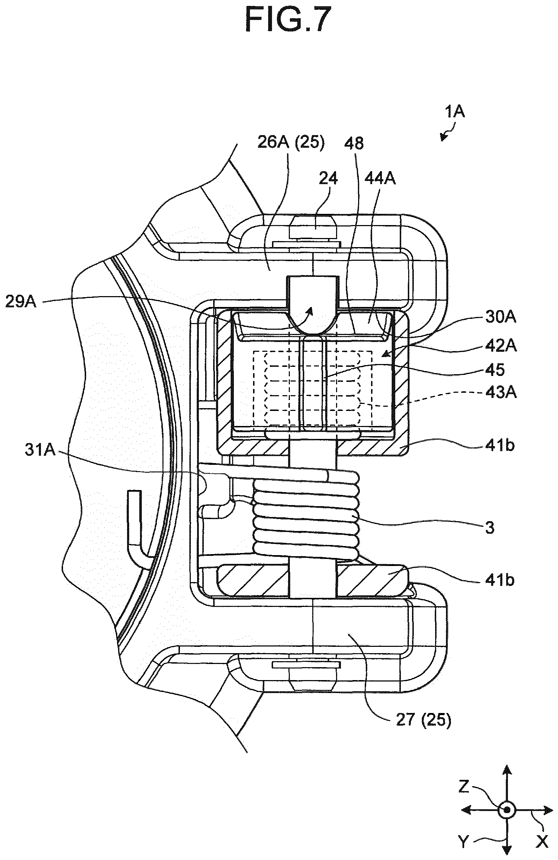

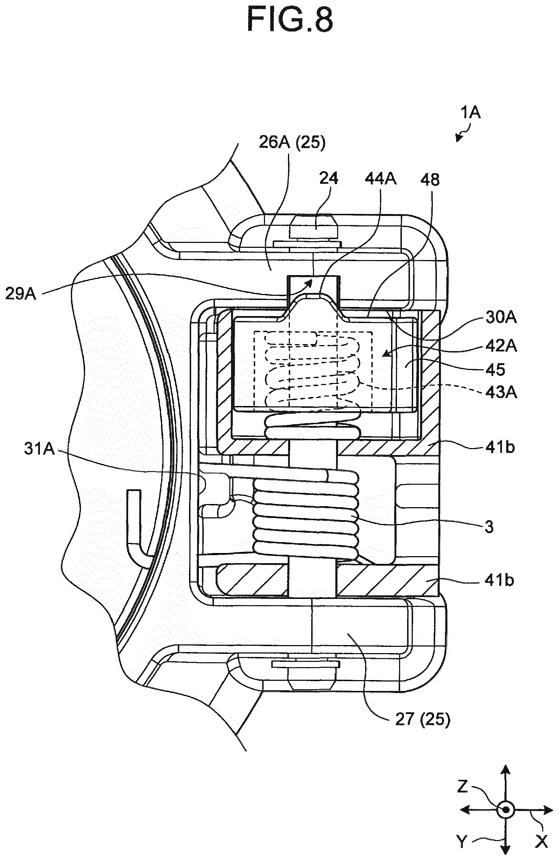

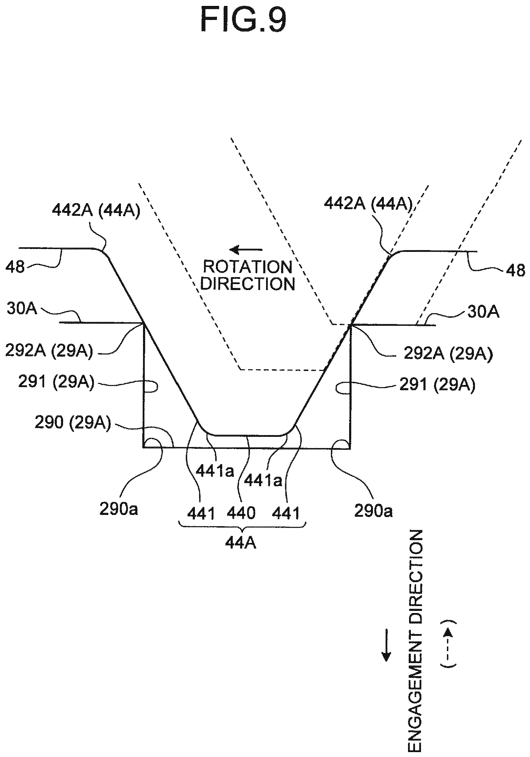

A cap opening and closing structure and a charging connector according to a first embodiment will now be described with reference to FIGS. 1 to 9. FIG. 1 is a perspective view that illustrates a schematic configuration of the charging connector to which the cap opening and closing structure according to the first embodiment is adapted. FIG. 2 is a side view that illustrates a schematic configuration of the charging connector to which the cap opening and closing structure according to the first embodiment is adapted. FIG. 3 is an exploded perspective view that illustrates a schematic configuration of the cap opening and closing structure according to the first embodiment. FIG. 4 is a side view that illustrates a schematic configuration of an inlet damper in the cap opening and closing structure according to the first embodiment. FIG. 5 is a partial perspective view that illustrates a schematic configuration of an inlet damper supporting unit in the cap opening and closing structure according to the first embodiment. FIG. 6 is a sectional view of FIG. 1 along line A-A. FIG. 7 is a partial sectional view that illustrates a schematic configuration of the cap opening and closing structure according to the first embodiment. FIG. 8 is a partial sectional view that illustrates a schematic configuration of the cap opening and closing structure according to the first embodiment. FIG. 9 is a schematic view that illustrates engagement operation between a convex portion and a concave portion in the cap opening and closing structure. FIG. 1 illustrates a state with the cap in an open position, whereas FIG. 2 illustrates a state with the cap in a closed position. FIG. 5 illustrates a cap supporting unit of a housing supporting the cap. FIG. 6 illustrates a sectional surface of a rotation supporting section of a cap in the charging connector with the cap opened. FIG. 7 illustrates a state with the cap in the closed position, whereas FIG. 8 illustrates a state with the cap in the open position.

In the following description, an X direction in the drawings corresponds to a width direction of the charging connector in the embodiment and also a direction perpendicular to a direction of a rotation axis of the cap. A Y direction corresponds to the direction of the rotation axis of the cap in the charging connector in the embodiment and also a direction perpendicular to the X direction. A Z direction corresponds to a height direction of the charging connector in the embodiment and also a direction perpendicular to the X direction and the Y direction. The Z direction is a height direction of the charging connector and is not limited to a vertical direction.

A charging connector 100 to which a cap opening and closing structure 1A according to the first embodiment is applied will now be described. The charging connector 100 in FIGS. 1 and 2 is installed to a vehicle such as an electric vehicle (EV) and a plug-in hybrid electric vehicle (PHEV) and is electrically connected with a charging connector outside the vehicle to charge a battery mounted on the vehicle. The charging connector 100 is fixed to, for example, a body panel of the vehicle. The cap opening and closing structure 1A is provided with a housing 2, a torsion spring 3, and a cap 4.

The housing 2 has a connection part 22b electrically connected with a connection object outside the vehicle through openings 22a. As an example, the connection object outside the vehicle is a charging connector. More specifically, the housing 2 includes a vehicle body installation unit 21, a housing body 22, a hood unit 23, a hinge pin 24, a cap supporting unit 25, and a cap lock unit 28.

The vehicle body installation unit 21 is configured by a substantially rectangular plate member made from a synthetic resin. The vehicle body installation unit 21 is provided with through-holes 21a serving as mounting holes to a vehicle body panel (not illustrated) at the four corners thereof. The vehicle body installation unit 21 is fixed to the vehicle body panel with bolts (not illustrated) passed into the four through-holes 21a and fastened to the vehicle body panel.

The housing body 22 is configured by a cylindrical member made of a synthetic resin and extends from a substantially center part of the vehicle body installation unit 21 in the height direction. The housing body 22 includes the connection part 22b having the openings 22a in the upward direction toward the outside of the vehicle. The connection part 22b is electrically connected with the charging connector outside the vehicle through the openings 22a. The connection part 22b accommodates inside thereof a terminal fitting (not illustrated) connected to an electric wire (not illustrated) extending from a battery (not illustrated) inside the vehicle.

The hood unit 23 is made of a synthetic resin and is in a substantially cylindrical shape. The hood unit 23 is disposed above the vehicle body installation unit 21 in the Z direction in a manner covering the connection part 22b from the outer periphery thereof. The hood unit 23 is provided with the cap supporting unit 25 and the cap lock unit 28 on the outer peripheral surface.

The hinge pin 24 is an elongated metal rod member and is passed into the torsion spring 3 and the cap 4 in the Y direction, which is the rotation axis direction of the cap 4, through the cap supporting unit 25. The hinge pin 24 has the cap 4 rotate with respect to the housing 2 around the rotation axis.

The cap supporting unit 25 rotatably supports the cap 4 using the hinge pin 24. The cap supporting unit 25 is configured with a pair of first supporting unit 26A and second supporting units 27 facing each other with a certain distance interposed therebetween. In the cap supporting unit 25, the first supporting unit 26A and the second supporting unit 27 sandwich the cap 4 from the rotation axis direction. The first supporting unit 26A has a through-hole 26a into which the hinge pin 24 is passed and a concave portion 29A, on a side surface 30A facing the second supporting unit 27. The second supporting unit 27 has a through-hole 27a into which the hinge pin 24 is passed.

The concave portion 29A corresponds to either a first engagement portion or a second engagement portion and is formed in a groove concaved in the rotation axis direction of the cap 4 and extending in the height direction (the Z direction) perpendicular to the rotation axis direction. As illustrated in FIG. 9, the concave portion 29A is configured with a bottom surface 290, a pair of ends 290a, a pair of inner side surfaces 291 vertically arranged from the respective ends 290a of the bottom surface 290, and a pair of ends 292A. The bottom surface 290 is formed between the ends 290a facing each other in the rotation direction. The end 292A is formed at a position where the inner side surface 291 and the side surface 30A perpendicularly contact each other.

The cap lock unit 28 is a lock mechanism provided on the outer peripheral surface of the hood unit 23 on an opposite side to the cap supporting unit 25 and locking the cap 4 in the closed position.

The torsion spring 3 is a first biasing member, examples of which include a metallic torsion coil spring. The torsion spring 3 biases the cap 4 in a manner having the cap 4 rotate around the rotation axis in a direction from the closed position toward the open position. The torsion spring 3 is disposed between the first supporting unit 26A and the second supporting unit 27 along with a rotation supporting section 41b of the cap 4 and has the hinge pin 24 passed on the inner peripheral side thereof. The torsion spring 3 has an end locked to an outer peripheral surface 31A of the hood unit 23 of the housing 2 illustrated in FIGS. 5 to 8 and has the other end locked to an outer side surface 41d of the rotation supporting section 41b of the cap 4.

The cap 4 closes the openings 22a in the closed position and has the connection part 22b exposed outside the vehicle through the openings 22a in the open position. The cap 4 is configured with a cap body 41 made from a synthetic resin, an inlet damper 42A made of a synthetic resin, and a metallic inlet damper spring 43A.

The cap body 41 includes a cover 41a, a rotation supporting section 41b, an accommodation unit 41c, the outer side surface 41d facing the housing 2, and a rotation stop unit 41e. The cover 41a is formed by a substantially circular plate member. The cover 41a closes the openings 22a in a manner covering the openings 22a when the cap 4 is in the closed position. The cover 41a has the connection part 22b exposed through the openings 22a when the cap 4 is in the open position. The rotation supporting section 41b is provided on an end of the cover 41a and is rotatably supported with respect to the housing 2. The accommodation unit 41c opens in the rotation axis direction of the rotation supporting section 41b, accommodates the inlet damper spring 43A and the inlet damper 42A in order from an opening side, and has the hinge pin 24 passed into the accommodation unit 41c from the other opening side. The outer side surface 41d is curved in a circular arc along the rotation direction of the rotation supporting section 41b, in other words, curved along a circular arc (a circular arc surface) having the rotation axis of the cap 4 as the center. The rotation stop unit 41e is a projection formed on the outer side surface 41d of the rotation supporting section 41b and extending in the rotation axis direction. When the cap 4 is arranged in the open position, the rotation stop unit 41e comes in contact with the outer peripheral surface 31A of the hood unit 23 and prevents the cap 4 from rotating.

The inlet damper 42A is movably supported in the rotation axis direction with respect to the rotation supporting section 41b of the cap 4. The inlet damper 42A is in a cylindrical shape and is accommodated in the accommodation unit 41c of the rotation supporting section 41b with the inlet damper spring 43A accommodated in the inlet damper 42A. The inlet damper 42A is pressed by the inlet damper spring 43A in the rotation axis direction. The inlet damper 42A includes a convex portion 44A, a rotation stop projection 45, and a through-hole 46A as illustrated in FIGS. 3 and 4.

The convex portion 44A is either a first engagement portion or a second engagement portion, projects from a surface 48 of the inlet damper 42A in the rotation axis direction, and extends in the radius direction perpendicular to the rotation axis direction. The surface 48 is a surface facing the side surface 30A of the first supporting unit 26A. More specifically, the surface 48 of the inlet damper 42A and the side surface 30A of the first supporting unit 26A face each other in the rotation axis direction. The convex portion 44A is engaged with the concave portion 29A provided on the side surface 30A in the open position of the cap 4. As illustrated in FIG. 9, the convex portion 44A has a top surface 440, a pair of closely located ends 441a, two inclined surfaces 441, and a pair of distanced ends 442A. The top surface 440 is formed between the closely located ends 441a closely facing each other in the rotation direction. The two inclined surfaces 441 are each formed in a manner stretching in the engagement direction from the closely located ends 441a disposed in respective ends of the top surface 440 in the rotation direction toward the pair of distanced ends 442A distantly facing each other in the rotation direction. The two inclined surfaces 441 are inclined in a manner widening from the top surface 440 toward the engagement direction (the direction in the dotted allow in FIG. 9). The two inclined surfaces 441 are formed in a manner having the convex portion 44A engaged with the concave portion 29A in the open position of the cap 4 with the top surface 440 not contacting the bottom surface 290. Engagement between the convex portion 44A and the concave portion 29A indicates a state in which the pair of ends 292A contacts respective two inclined surfaces 441, and this state will be referred to as an engagement state.

The rotation stop projection 45 is formed on an outer peripheral surface 47 in a manner extending in the rotation axis direction. The rotation stop projection 45 is engaged with a concave portion formed on the inner peripheral surface of the accommodation unit 41c when the accommodation unit 41c accommodates the inlet damper 42A.

The through-hole 46A penetrates in the rotation axis direction and is in a stepped shape in which a part has a smaller inner diameter than the inner diameter of the other part in the rotation axis direction. The through-hole 46A accommodates the inlet damper spring 43A and has the hinge pin 24 passed thereinto.

The inlet damper spring 43A is a second biasing member, examples of which include a metallic compression coil spring. The inlet damper spring 43A is accommodated in the accommodation unit 41c coaxially with the rotation axis of the cap 4 along with the inlet damper 42A and has the hinge pin 24 passed on the inner peripheral side. The inlet damper spring 43A is provided between the rotation supporting section 41b and the inlet damper 42A and biases the surface 48 of the inlet damper 42A in a rotation axis direction toward the side surface 30A of the first supporting unit 26A of the rotation axis direction. In other words, the inlet damper spring 43A biases the surface 48 in the engagement direction. The engagement direction is a direction in which the convex portion 44A and the concave portion 29A as two engagement portions are engaged with each other in the open position of the cap 4.

The opening operation leading a cap from the closed position to the open position in the opening and closing structure 1A of the cap 4 will now be described. As illustrated in FIG. 7, the cap 4 and the housing 2 have the surface 48 of the inlet damper 42A in the rotation axis direction and the side surface 30A of the first supporting unit 26A face each other in the rotation axis direction in the closed position of the cap 4. The surface 48 is pressed by the inlet damper spring 43A in the rotation axis direction. The convex portion 44A of the surface 48 and the concave portion 29A of the side surface 30A are in a non-engagement state. The non-engagement state is a state in which neither of the pair of ends 292A of the concave portion 29A contacts with two inclined surfaces 441 of the convex portion 44A. The convex portion 44A is pressed by the inlet damper spring 43A in the rotation axis direction and contacts the side surface 30A of the first supporting unit 26A.

With the cap lock unit 28 releasing its locking and the cap 4 starting to rotate around the rotation axis from the closed position toward the open position by the pressing force of the torsion spring 3, the inlet damper 42A starts rotating around the rotation axis. While the cap 4 rotates, the surface 48 of the inlet damper 42A in the rotation axis direction and the side surface 30A of the first supporting unit 26A keep facing each other. The convex portion 44A slides while keeping the non-engagement state with the concave portion 29A and contacting the side surface 30A of the first supporting unit 26A by the pressing force of the inlet damper spring 43A.

When the cap 4 comes closer to the open position, the convex portion 44A starts engaging with the concave portion 29A and changes from the non-engagement state to the engagement state with the surface 48 and the side surface 30A keeping facing each other in the rotation axis direction. As illustrated in FIG. 9, the convex portion 44A starts engaging with the concave portion 29A with the top surface 440 sliding on the side surface 30A and approaching the concave portion 29A and with one inclined surface 441 facing opposite to the rotating direction sliding to the corresponding end 292A of the concave portion 29A by means of the pressing force of the inlet damper spring 43A (a half-engagement state). The top surface 440 of the convex portion 44A and the bottom surface 290 of the concave portion 29A gradually come closer to each other. The half-engagement state is a state in which one of the pair of ends 292A of the concave portion 29A is in contact with one of two inclined surfaces 441 of the convex portion 44A.

When the cap 4 reaches the open position, as illustrated in FIG. 9, both inclined surfaces 441 contact respective two ends 292A of the concave portion 29A, and the convex portion 44A is pressed in the engagement direction by the inlet damper spring 43A. When the cap 4 is in the closed position, the surface 48 of the inlet damper 42A in the rotation axis direction and the side surface 30A of the first supporting unit 26A keep facing each other in the rotation axis direction without contacting each other. In the foregoing state, the top surface 440 of the convex portion 44A and the bottom surface 290 of the concave portion 29A are positioned closest to each other.

With the above-described opening and closing structure 1A of the cap 4 and the charging connector 100, the convex portion 44A and the concave portion 29A are engaged with each other in the open position of the cap 4 in a manner having the convex portion 44A pressed against the concave portion 29A. This configuration can prevent the cap 4 from fluttering when the cap 4 is completely opened. In the non-engagement state with the concave portion 29A, the convex portion 44A is pressed to come into contact with the side surface 30A facing the convex portion 44A. With this configuration, the convex portion 44A slides in contact with the side surface 30A, which can control the force for opening the cap 4. Furthermore, such a simple configuration constituted by only resin members and springs is advantageous in reducing the cost. The metallic inlet damper spring 43A configured in a manner not exposed outside can keep liquid such as water from entering and prevent a decrease in durability due to, for example, freezing.

### Second Embodiment

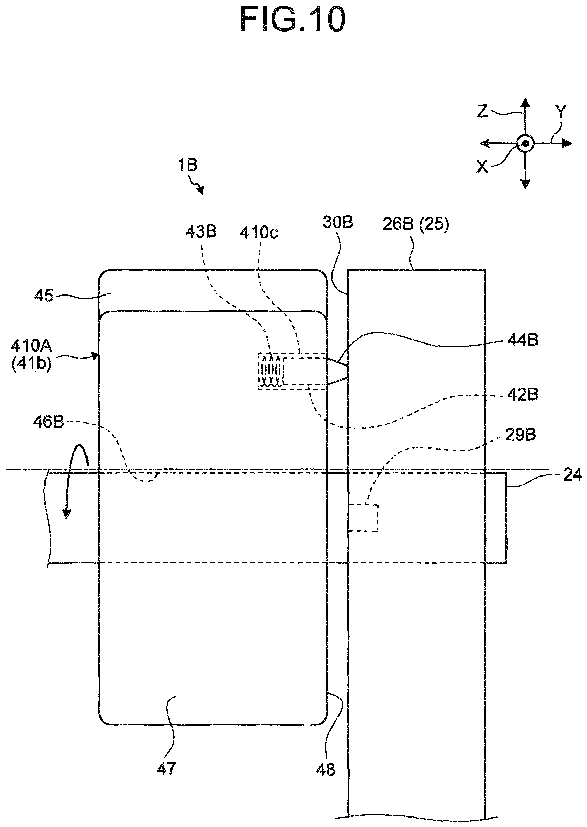

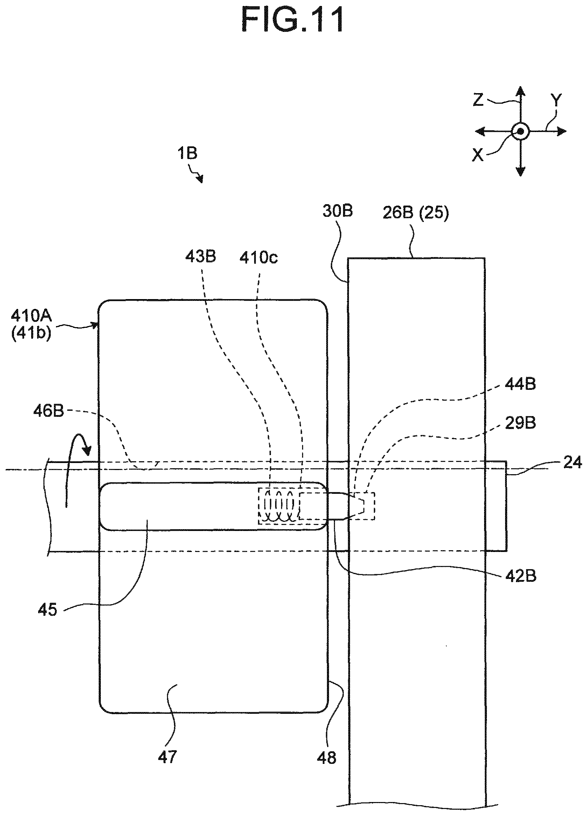

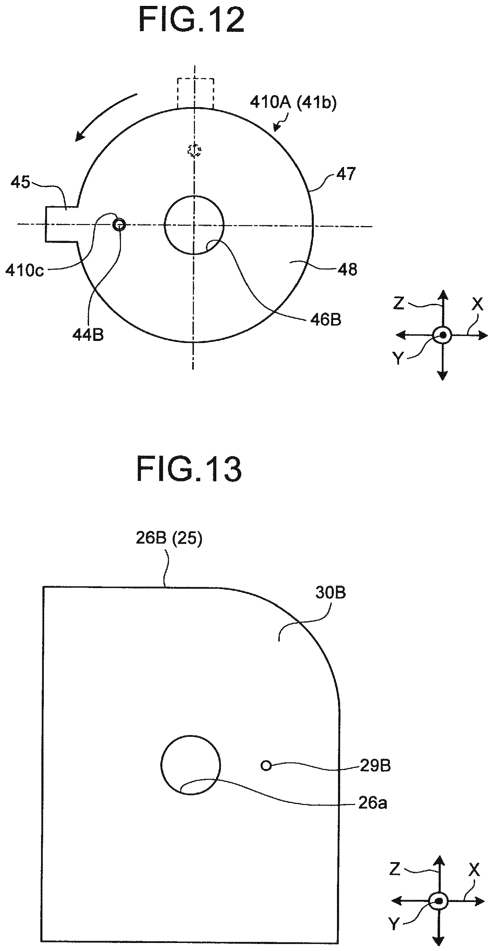

A cap opening and closing structure and the charging connector 100 according to a second embodiment will now be described with reference to FIGS. 10 to 13. Each of FIGS. 10 and 11 is a schematic view that illustrates a schematic configuration of the cap opening and closing structure according to the second embodiment. FIG. 12 is a side view that illustrates a schematic configuration of an inlet damper in the cap opening and closing structure according to the second embodiment. FIG. 13 is a side view that illustrates a schematic configuration of a first supporting unit of a housing according to the second embodiment. FIG. 10 illustrates a state with the cap in a closed position, whereas FIG. 11 illustrates a state with the cap in an open position. FIG. 12 illustrates the rotation supporting section viewed from a rotation axis direction. FIG. 13 illustrates the first supporting unit of the housing viewed from the rotation axis direction.

In an opening and closing structure 1B of the cap 4 and the charging connector 100 according to the second embodiment, as illustrated in FIGS. 10 to 13, configurations of a rotation supporting section and a cap supporting unit are different from those of the first embodiment. Like numerals indicate like components in the above-described first embodiment, and duplicated descriptions of the same configurations, actions, and effects will be omitted as much as possible (which applies to the subsequent embodiments).

In the housing 2, a first supporting unit 26B has the through-hole 26a into which the hinge pin 24 is passed and a concave portion 29B on a side surface 30B facing the second supporting unit 27.

The concave portion 29B is either a first engagement portion or a second engagement portion and is formed in a manner concaved in the rotation axis direction of the cap 4. The concave portion 29B is configured with the bottom surface 290, the inner side surfaces 291, and the ends 292A as illustrated in FIG. 9.

In the cap 4, a rotation supporting section 410A is integrally configured with the rotation supporting section 41b. The rotation supporting section 410A is accommodated in the accommodation unit 41c of the rotation supporting section 41b. The rotation supporting section 410A includes an accommodation unit 410c, an inlet damper spring 43B, an inlet damper 42B, the rotation stop projection 45, and a through-hole 46B.

The accommodation unit 410c is provided at a position in the radius direction directed outward from the rotation axis and opens in the rotation axis direction from the surface 48 of the rotation supporting section 410A. The accommodation unit 410c accommodates the inlet damper spring 43B and the inlet damper 42B and locks them by a known configuration so as not to protrude outside. The accommodation unit 410c is configured such that a convex portion 44B of the inlet damper 42B projects from the surface 48 by means of the pressing force of the inlet damper spring 43B.

The inlet damper spring 43B is a second biasing member, examples of which include a metallic compression coil spring having a small diameter. The inlet damper spring 43B is accommodated in the accommodation unit 410c along with the inlet damper 42B. The inlet damper spring 43B is provided between the inlet damper 42B and the rotation supporting section 410A and biases the surface 48 of the rotation supporting section 410A in the rotation axis direction toward the side surface 30B of the first supporting unit 26B of the rotation axis direction. The inlet damper spring 43B biases the inlet damper 42B in an engagement direction in which the convex portion 44B and the concave portion 29B are engaged with each other in the open position of the cap 4. The engagement direction is a direction in which the convex portion 44B and the concave portion 29B as two engagement portions can be engaged with each other in the open position of the cap 4.

The inlet damper 42B is movably supported in the rotation axis direction with respect to the rotation supporting section 410A. The inlet damper 42B is in a cylindrical shape and is accommodated in the accommodation unit 410c of the rotation supporting section 410A. The inlet damper 42B has the convex portion 44B at an end thereof.

The convex portion 44B is either a first engagement portion or a second engagement portion and projects from the surface 48 of the rotation supporting section 410A in the rotation axis direction. The surface 48 is a surface facing the side surface 30B of the first supporting unit 26B. More specifically, the surface 48 of the rotation supporting section 410A and the side surface 30B of the first supporting unit 26B face each other in the rotation axis direction. The convex portion 44B is engaged with the concave portion 29B provided on the side surface 30B in the open position of the cap 4. As illustrated in FIG. 9, the convex portion 44B is configured with the top surface 440 and two inclined surfaces 441.

The through-hole 46B penetrates in the rotation axis direction and has the same inner diameter between a part and the other part in the rotation axis direction. The through-hole 46B has the hinge pin 24 passed thereinto.

The opening operation leading the cap from the closed position to the open position in the opening and closing structure 1B of the cap 4 will now be described. As illustrated in FIG. 10, the cap 4 and the housing 2 have the surface 48 of the rotation supporting section 410A in the rotation axis direction and the side surface 30B of the first supporting unit 26B face each other in the rotation axis direction in the closed position of the cap 4. The inlet damper 42B is pressed by the inlet damper spring 43B in the rotation axis direction. The convex portion 44B of the inlet damper 42B and the concave portion 29B of the side surface 30B are in a non-engagement state. The non-engagement state is a state in which neither of the pair of ends 292A of the concave portion 29B contacts two inclined surfaces 441 of the convex portion 44B. The convex portion 44B is pressed by the inlet damper spring 43B in the rotation axis direction and contacts the side surface 30B of the first supporting unit 26B.

With the cap lock unit 28 releasing locking and the cap 4 starting rotating around the rotation axis from the closed position toward the open position by the pressing force of the torsion spring 3, the rotation supporting section 410A starts rotating around the rotation axis. While the cap 4 rotates, the surface 48 of the rotation supporting section 410A in the rotation axis direction and the side surface 30B of the first supporting unit 26B keep facing each other. The convex portion 44B slides while keeping the non-engagement state with the concave portion 29B and contacting the side surface 30B of the first supporting unit 26B by means of the pressing force of the inlet damper spring 43B.

When the cap 4 comes closer to the open position, the convex portion 44B starts engaging with the concave portion 29B and changes from the non-engagement state to the engagement state with the surface 48 and the side surface 30B keeping facing each other in the rotation axis direction. As illustrated in FIG. 9, the convex portion 44B starts engaging with the concave portion 29B with the top surface 440 sliding on the side surface 30B and approaching the concave portion 29B and with one inclined surface 441 facing opposite to the rotation direction sliding to the corresponding end 292A of the concave portion 29B by means of the pressing force of the inlet damper spring 43B (a half-engagement state). The top surface 440 of the convex portion 44B and the bottom surface 290 of the concave portion 29B gradually come closer to each other. The half-engagement state is a state in which one of the pair of ends 292A of the concave portion 29B is in contact with one of two inclined surfaces 441 of the convex portion 44B.

When the cap 4 reaches the open position, as illustrated in FIG. 11, the convex portion 44B is pressed in the engagement direction by the inlet damper spring 43B with both inclined surfaces 441 contacting respective two ends 292A of the concave portion 29B. When the cap 4 is in the closed position, the surface 48 of the rotation supporting section 410A and the side surface 30B of the first supporting unit 26B keep facing each other in the rotation axis direction without contacting each other. In this state, the top surface 440 of the convex portion 44B and the bottom surface 290 of the concave portion 29B are positioned closest to each other.

With the above-described opening and closing structure 1B of the cap 4 and the charging connector 100, the convex portion 44B and the concave portion 29B are engaged with each other in the open position of the cap 4 in a manner having the convex portion 44B pressed against the concave portion 29B. This configuration can prevent the cap 4 from fluttering when the cap 4 is completely opened. In the non-engagement state with the concave portion 29B, the convex portion 44B is pressed to contact the side surface 30B facing the convex portion 44B. With this configuration, the convex portion 44B slides in contact with the side surface 30B, thereby enabling the force opening the cap 4 to control. Furthermore, such a simple configuration constituted by only resin members and springs is advantageous in reducing the cost. The metallic inlet damper spring 43B configured in a manner not exposed outside can keep liquid such as water from entering and prevent a decrease in durability due to, for example, freezing.

### Third Embodiment

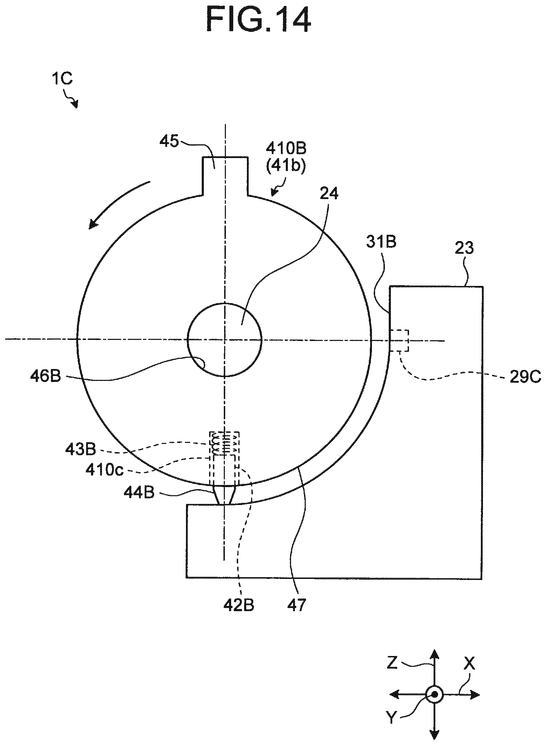

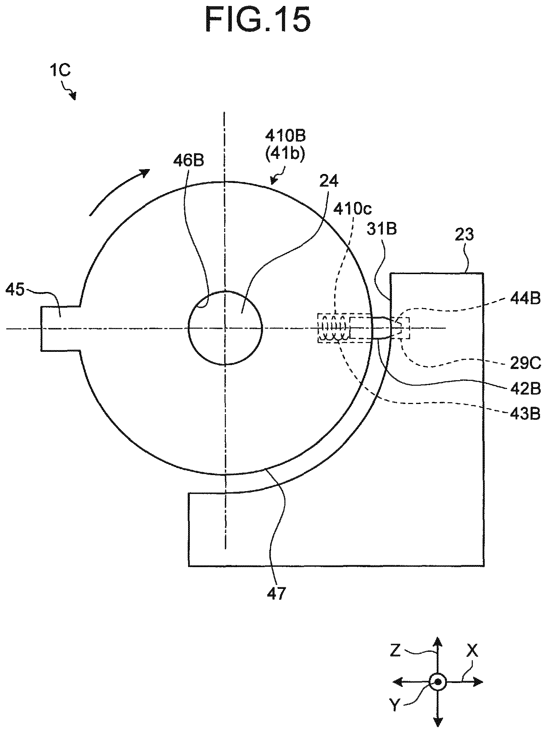

A cap opening and closing structure according to a third embodiment will now be described with reference to FIGS. 14 and 15. FIG. 14 is a schematic view that illustrates a schematic configuration of the cap opening and closing structure according to the third embodiment. FIG. 15 is another schematic view that illustrates a schematic configuration of the cap opening and closing structure according to the third embodiment. FIG. 14 illustrates a state with the cap in the closed position, whereas FIG. 15 illustrates a state with the cap in the open position.

In an opening and closing structure 1C of the cap 4 and the charging connector 100 according to the third embodiment, as illustrated in FIGS. 14 and 15, configurations of a rotation supporting section and a cap supporting unit are different from those of the first embodiment.

In the housing 2, the hood unit 23 has a side surface 31B facing the outer peripheral surface 47 of a rotation supporting section 410B of the cap 4 and a concave portion 29C formed on the side surface 31B. The side surface 31B is curved in a circular arc along the rotation direction of the rotation supporting section 410B. The side surface 31B is formed in a manner keeping facing the outer peripheral surface 47 of the rotation supporting section 410B while the cap 4 rotates. The side surface 31B and the outer peripheral surface 47 face each other in the radius direction of the rotation supporting section 410B.

The concave portion 29C is either a first engagement portion or a second engagement portion and is concaved outward from the side surface 31B in the radius direction of the rotation supporting section 410B. The concave portion 29C is configured with the bottom surface 290, the inner side surfaces 291, and the ends 292A as illustrated in FIG. 9.

In the cap 4, the rotation supporting section 410B is integrally configured with the rotation supporting section 41b. The rotation supporting section 410B is accommodated in the accommodation unit 41c of the rotation supporting section 41b. The rotation supporting section 410B includes the accommodation unit 410c, the inlet damper spring 43B, the inlet damper 42B, the rotation stop projection 45, and the through-hole 46B.

The accommodation unit 410c opens from the outer peripheral surface 47 of the rotation supporting section 410B in the radius direction. The accommodation unit 410c accommodates the inlet damper spring 43B and the inlet damper 42B and locks them by a known configuration so as not to protrude outside. The accommodation unit 410c is configured such that the convex portion 44B of the inlet damper 42B projects from the outer peripheral surface 47 by means of the pressing force of the inlet damper spring 43B.

The inlet damper spring 43B is provided between the rotation supporting section 410B and the inlet damper 42B and biases the inlet damper 42B outward in the radius direction. The inlet damper spring 43B biases the inlet damper 42B in an engagement direction in which the convex portion 44B and the concave portion 29C are engaged with each other in the open position of the cap 4. The engagement direction is a direction in which the convex portion 44B and the concave portion 29C can be engaged with each other in the open position of the cap 4.

The inlet damper 42B is movably supported in the radius direction with respect to the rotation supporting section 410B. The convex portion 44B is either a first engagement portion or a second engagement portion and projects from the outer peripheral surface 47 of the rotation supporting section 410B. The outer peripheral surface 47 is a surface facing the side surface 31B of the hood unit 23. More specifically, the outer peripheral surface 47 of the rotation supporting section 410B and the side surface 31B of the hood unit 23 face each other in the radius direction. The convex portion 44B is engaged with the concave portion 29C provided on the side surface 31B in the open position of the cap 4.

The opening operation leading the cap from the closed position to the open position in the opening and closing structure 1C of the cap 4 will now be described. As illustrated in FIG. 14, the cap 4 and the housing 2 have the outer peripheral surface 47 of the rotation supporting section 410B and the side surface 31B of the hood unit 23 face each other in the radius direction in the closed position of the cap 4. The inlet damper 42B is pressed by the inlet damper spring 43B in the radius direction. The convex portion 44B of the inlet damper 42B and the concave portion 29C of the side surface 31B are in a non-engagement state. The non-engagement state is a state in which neither of the pair of ends 292A of the concave portion 29C contacts two inclined surfaces 441 of the convex portion 44B. The convex portion 44B is pressed by the inlet damper spring 43B in the radius direction and contacts the side surface 31B of the hood unit 23.

With the cap lock unit 28 releasing locking and the cap 4 starting rotating around the rotation axis from the closed position toward the open position by means of the pressing force of the torsion spring 3, the rotation supporting section 410B starts rotating around the rotation axis. While the cap 4 rotates, the outer peripheral surface 47 of the rotation supporting section 410B and the side surface 31B of the hood unit 23 keep facing each other. The convex portion 44B slides while keeping the non-engagement state with the concave portion 29C and contacting the side surface 31B of the hood unit 23 by means of the pressing force of the inlet damper spring 43B.

When the cap 4 comes closer to the open position, the convex portion 44B starts engaging with the concave portion 29C and changes from the non-engagement state to the engagement state with the outer peripheral surface 47 and the side surface 31B keeping facing each other in the radius direction. As illustrated in FIG. 9, the convex portion 44B starts engaging with the concave portion 29C with the top surface 440 sliding on the side surface 31B and approaching the concave portion 29C and with one inclined surface 441 facing opposite to the rotation direction sliding to the corresponding end 292A of the concave portion 29C by means of the pressing force of the inlet damper spring 43B (a half-engagement state). The top surface 440 of the convex portion 44B and the bottom surface 290 of the concave portion 29C gradually come closer to each other. The half-engagement state is a state in which one of the pair of ends 292A of the concave portion 29C is in contact with one of two inclined surfaces 441 of the convex portion 44B.

When the cap 4 reaches the open position, as illustrated in FIGS. 15 and 9, the convex portion 44B is pressed in the engagement direction by the inlet damper spring 43B with both inclined surfaces 441 contacting respective two ends 292A of the concave portion 29C. When the cap 4 is in the closed position, the outer peripheral surface 47 of the rotation supporting section 410B and the side surface 31B of the hood unit 23 keep facing each other in the radius direction without contacting each other. In this state, the top surface 440 of the convex portion 44B and the bottom surface 290 of the concave portion 29C are positioned closest to each other.

With the above-described opening and closing structure 1C of the cap 4 and the charging connector 100, the convex portion 44B and the concave portion 29C are engaged with each other in the open position of the cap 4 in a manner having the convex portion 44B pressed against the concave portion 29C. This configuration can prevent the cap 4 from fluttering when the cap 4 is completely opened. In the non-engagement state with the concave portion 29C, the convex portion 44B is pressed to contact the side surface 31B facing the convex portion 44B. With this configuration, the convex portion 44B slides in contact with the side surface 31B, which can control the force for opening the cap 4. Furthermore, such a simple configuration is advantageous in reducing the cost. The configuration can keep liquid such as water from entering, and prevent a decrease in durability due to, for example, freezing.

### Fourth Embodiment

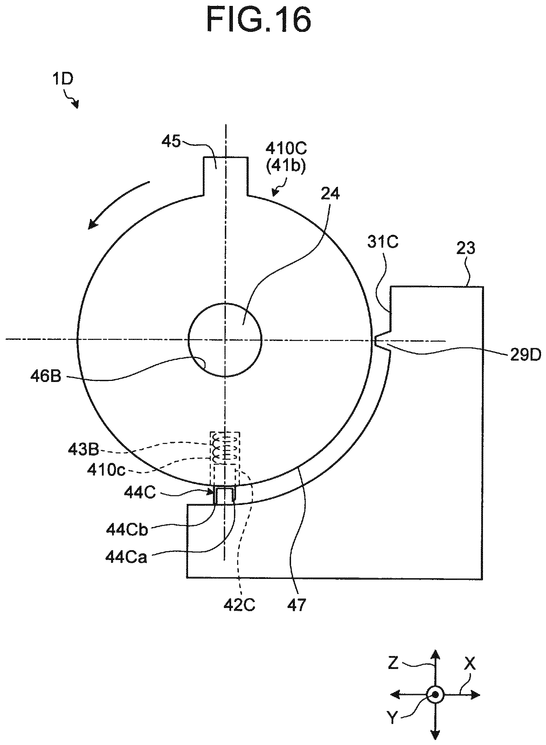

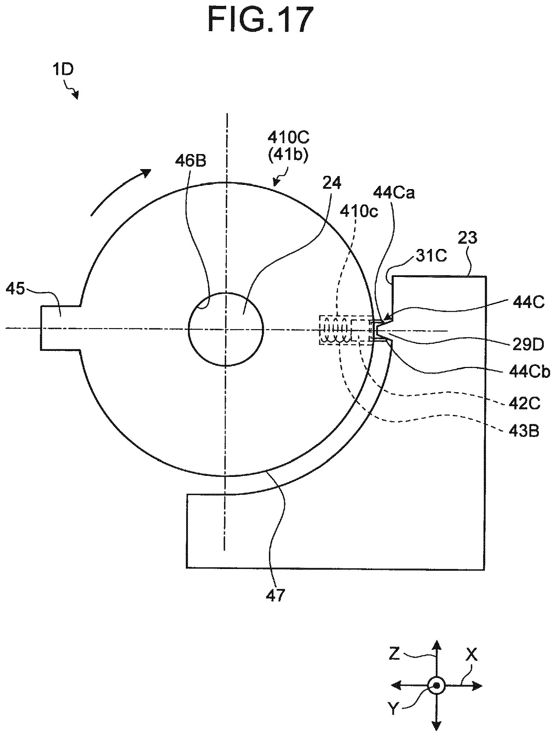

A cap opening and closing structure and the charging connector 100 according to a fourth embodiment will now be described with reference to FIGS. 16 and 17. FIG. 16 is a schematic view that illustrates a schematic configuration of the cap opening and closing structure according to the fourth embodiment. FIG. 17 is another schematic view that illustrates a schematic configuration of the cap opening and closing structure according to the fourth embodiment. FIG. 16 illustrates a state with the cap 4 in the closed position, whereas FIG. 17 illustrates a state with the cap 4 in the open position.

In a cap opening and closing structure 1D and the charging connector 100 according to the fourth embodiment, as illustrated in FIGS. 16 and 17, configurations of a rotation supporting section and a cap supporting unit are different from those of the first embodiment.

In the housing 2, the hood unit 23 has a side surface 31C facing the outer peripheral surface 47 of a rotation supporting section 410C of the cap 4 and a convex portion 29D formed on the side surface 31C. The side surface 31C is curved in a circular arc along the rotation direction of the rotation supporting section 410C. The side surface 31C is formed in a manner keeping facing the outer peripheral surface 47 of the rotation supporting section 410C while the cap 4 rotates. The side surface 31C and the outer peripheral surface 47 face each other in the radius direction of the rotation supporting section 410C.

The convex portion 29D is either a first engagement portion or a second engagement portion and projects outward from the side surface 31C in the radius direction of the rotation supporting section 410C. As illustrated in FIG. 9, the convex portion 29D is configured with the top surface 440 and two inclined surfaces 441.

In the cap 4, the rotation supporting section 410C is integrally configured with the rotation supporting section 41b. The rotation supporting section 410C is accommodated in the accommodation unit 41c of the rotation supporting section 41b. The rotation supporting section 410C includes the accommodation unit 410c, the inlet damper spring 43B, an inlet damper 42C, the rotation stop projection 45, and the through-hole 46B.

The accommodation unit 410c opens outward from the outer peripheral surface 47 of the rotation supporting section 410C in the radius direction. The accommodation unit 410c accommodates the inlet damper spring 43B and the inlet damper 42C and locks them by a known configuration so as not to protrude outside. The accommodation unit 410c is configured such that a concave portion 44C of the inlet damper 42C projects from the outer peripheral surface 47 by means of the pressing force of the inlet damper spring 43B.

The inlet damper spring 43B is provided between the rotation supporting section 410C and the inlet damper 42C and presses the inlet damper 42C outward in the radius direction. The inlet damper spring 43B presses the inlet damper 42C in an engagement direction in which the concave portion 44C and the convex portion 29D are engaged with each other in the open position of the cap 4. The engagement direction is a direction in which the concave portion 44C and the convex portion 29D can be engaged with each other in the open position of the cap 4.

The inlet damper 42C is movably supported in the radius direction with respect to the rotation supporting section 410C. The convex portion 44C is either a first engagement portion or a second engagement portion and projects from the outer peripheral surface 47 of the rotation supporting section 410C. The outer peripheral surface 47 is a surface facing the side surface 31C of the hood unit 23. More specifically, the outer peripheral surface 47 of the rotation supporting section 410C and the side surface 31C of the hood unit 23 face each other in the radius direction.

The concave portion 44C is engaged with the convex portion 29D provided on the side surface 31C in the open position of the cap 4. The concave portion 44C has a substantially U-shaped sectional surface opening in the radius direction when viewed from the rotation axis direction. The concave portion 44C has two front ends 44Ca and 44Cb at the opening. Of the front ends 44Ca and 44Cb, the front end 44Ca on the rotation direction side from the closed position toward the open position has a diagonally cut shape. The front end 44Ca has the cut surface facing toward the rotation direction side. The front end 44Ca has the length in the radius direction smaller than the length of the front end 44Cb. The concave portion 44C is preferably made from a hard-to-break flexible metal. The corners of the front ends 44Ca and 44Cb are preferably chamfered.

The opening operation leading the cap from the closed position to the open position in the opening and closing structure 1D of the cap 4 will now be described. As illustrated in FIG. 16, the cap 4 and the housing 2 have the outer peripheral surface 47 of the rotation supporting section 410C and the side surface 31C of the hood unit 23 face each other in the radius direction in the closed position of the cap 4. The inlet damper 42C is pressed by the inlet damper spring 43B in the radius direction. The concave portion 44C of the inlet damper 42C and the convex portion 29D of the side surface 31C are in a non-engagement state. The non-engagement state is a state in which neither front end 44Ca nor 44Cb of the concave portion 44C contacts two inclined surfaces 441 of the convex portion 29D. The concave portion 44C is pressed by the inlet damper spring 43B in the radius direction and brings the front end 44Cb into contact with the side surface 31C of the hood unit 23.

With the cap lock unit 28 releasing locking and the cap 4 starting rotating around the rotation axis from the closed position toward the open position by means of the pressing force of the torsion spring 3, the rotation supporting section 410C starts rotating around the rotation axis. While the cap 4 rotates, the outer peripheral surface 47 of the rotation supporting section 410C and the side surface 31C of the hood unit 23 keep facing each other. The concave portion 44C slides while keeping the non-engagement state with the convex portion 29D and bringing the front end 44Cb into contact with the side surface 31C of the hood unit 23 by means of the pressing force of the inlet damper spring 43B.

When the cap 4 comes closer to the open position, the concave portion 44C starts engaging with the convex portion 29D and changes from the non-engagement state to the engagement state with the outer peripheral surface 47 and the side surface 31C keeping facing each other in the radius direction. The concave portion 44C starts engaging with the convex portion 29D with the front end 44Cb sliding on the side surface 31C and approaching the convex portion 29D and with the front end 44Ca sliding on the inclined surface 441 facing opposite to the rotation direction, of two inclined surfaces 441 of the convex portion 29D, by means of the pressing force of the inlet damper spring 43B (a half-engagement state). The half-engagement state is a state in which the front end 44Ca of the concave portion 44C is in contact with one of two inclined surfaces 441 of the convex portion 29D. In the concave portion 44C, when the front end 44Ca climbs over the top surface 440 of the convex portion 29D, the front end 44Cb approaches the inclined surface 441 of the convex portion 29D facing opposite to the rotation direction. The bottom surface 290 of the concave portion 44C and the top surface 440 of the convex portion 29D gradually come closer to each other.

When the cap 4 reaches the open position, the concave portion 44C is pressed in the engagement direction by the inlet damper spring 43B with the two front ends 44Ca and 44Cb contacting respective inclined surfaces 441 of the convex portion 29D. When the cap 4 is in the closed position, the outer peripheral surface 47 of the rotation supporting section 410C and the side surface 31C of the hood unit 23 keep facing each other in the radius direction without contacting each other. In this state, the bottom surface 290 of the concave portion 44C and the top surface 440 of the convex portion 29D are positioned closest to each other.

In the above-described opening and closing structure 1D of the cap 4 and the charging connector 100, the concave portion 44C pressed by the inlet damper spring 43B is provided on the outer peripheral surface 47 of the rotation supporting section 410C, and the convex portion 29D is provided on the side surface 31C of the hood unit 23. For the above-described opening and closing structure 1C and the charging connector 100, in this embodiment, the concave portion 44C is used as the engagement portion on the rotation supporting section side instead of the convex portion 44B, and the convex portion 29D is used as the engagement portion on the hood unit 23 side instead of the concave portion 29C. The opening and closing structure 1D and the charging connector 100 can therefore obtain the same advantageous effects as those of the opening and closing structure 1C and the charging connector 100 in the third embodiment.

### Modification

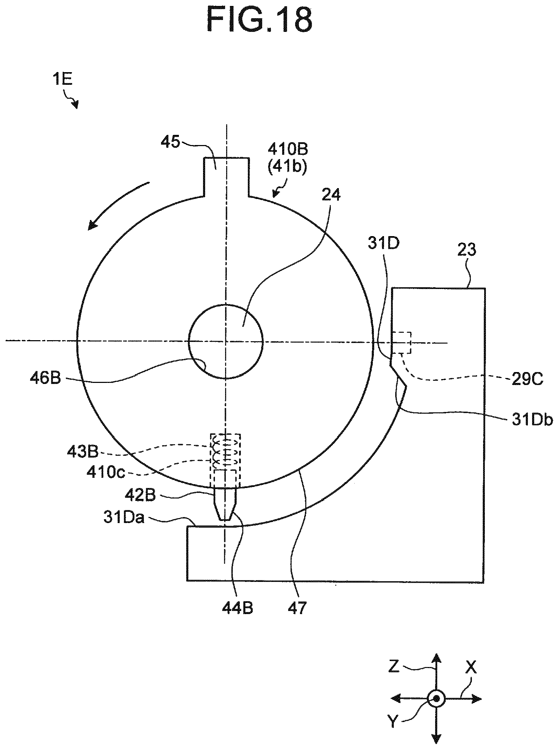

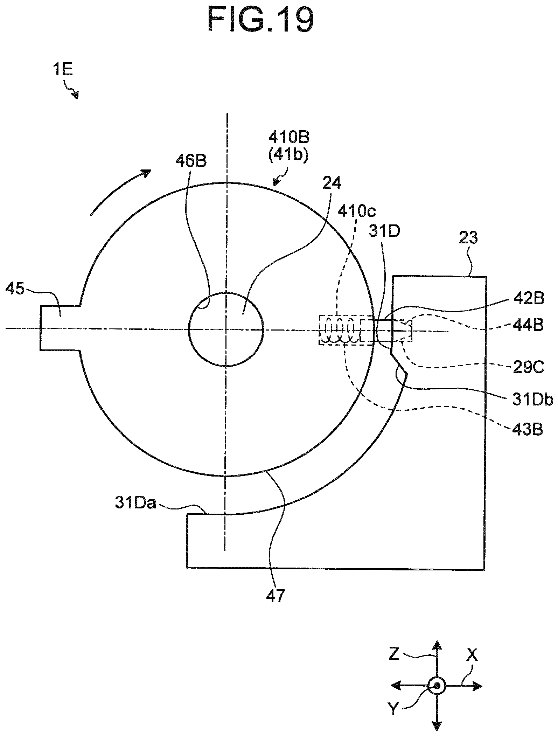

Each of FIGS. 18 and 19 is a schematic view that illustrates a schematic configuration of a cap opening and closing structure according to a first modification of the third embodiment. FIG. 18 illustrates a state with the cap in the closed position, whereas FIG. 19 illustrates a state with the cap in the open position.

An opening and closing structure 1E of the cap 4 and the charging connector 100 according to the first modification of the third embodiment are different from the counterparts in the third embodiment in that, as illustrated in FIGS. 18 and 19, the convex portion 44B is prevented from contacting a side surface 31D of the hood unit 23 when the cap 4 is in the closed position and when the cap 4 is rotating.

In the housing 2, the hood unit 23 has a side surface 31D, a side surface 31Da, an inclined surface 31Db, and a concave portion 29C formed on the side surface 31D. The side surface 31D is a surface facing the outer peripheral surface 47 of the rotation supporting section 410B in a position right before the open position of the cap 4 and in the open position of the cap 4. The side surface 31D and the outer peripheral surface 47 face each other in the radius direction of the rotation supporting section 410B. The side surface 31D connects to at least the inner side surface 291 facing opposite to the rotation direction, of two inner side surfaces 291 of the concave portion 29C. The side surface 31Da is curved in a circular arc at least from a position facing the convex portion 44B in the closed position to a position in front of the concave portion 29C along the rotation direction of the rotation supporting section 410B. The side surface 31Da and the outer peripheral surface 47 of the rotation supporting section 410B are separated from each other in the radius direction of the rotation supporting section 410B from the open position toward the closed position in the rotation direction. Of the rotation directions, a direction from the open position toward the closed position is referred to as a closing direction, whereas a direction from the closed position toward the open position is referred as an opening direction. In other words, the side surface 31Da and the outer peripheral surface 47 of the rotation supporting section 410B facing each other are separated from each other in the radius direction of the rotation supporting section 410B toward the closing direction. The side surface 31Da is connected to the inclined surface 31Db in front of the concave portion 29C. The inclined surface 31Db is connected to the side surface 31D in a manner gradually reducing the distance from the outer peripheral surface 47 along the rotation direction. The distance between the side surface 31D and the outer peripheral surface 47 is shorter than the distance between the side surface 31Da and the outer peripheral surface 47.

The opening operation leading the cap from the closed position to the open position in the opening and closing structure 1E of the cap 4 will now be described. As illustrated in FIG. 18, the cap 4 and the housing 2 have the outer peripheral surface 47 of the rotation supporting section 410B and the side surface 31D of the hood unit 23 face each other in the radius direction in the closed position of the cap 4. The inlet damper 42B is pressed by the inlet damper spring 43B in the radius direction of the rotation supporting section 410B. The convex portion 44B of the inlet damper 42B and the concave portion 29C of the side surface 31D are in a non-engagement state. The non-engagement state is a state in which neither of the pair of ends 292A of the concave portion 29C contacts two inclined surfaces 441 of the convex portion 44B. The convex portion 44B is pressed in the radius direction by the inlet damper spring 43B without contacting the side surface 31Da of the hood unit 23.

With the cap lock unit 28 releasing locking and the cap 4 starting rotating around the rotation axis from the closed position toward the open position by the pressing force of the torsion spring 3, the rotation supporting section 410B starts rotating around the rotation axis. While the cap 4 rotates, the outer peripheral surface 47 of the rotation supporting section 410B and the side surface 31D of the hood unit 23 keep facing each other. The convex portion 44B is separated from the concave portion 29C and remains in the non-engagement state without contacting or sliding on the side surface 31Da of the hood unit 23.

When the cap 4 comes closer to the open position, the convex portion 44B slides on the inclined surface 31Db in contact with the inclined surface 31Db by the pressing force of the inlet damper spring 43B and starts engaging with the concave portion 29C. The convex portion 44B approaches the concave portion 29C with the top surface 440 sliding on the inclined surface 31Db and the side surface 31D. The convex portion 44B starts engaging with the concave portion 29C with the inclined surface 441 facing opposite to the rotation direction sliding to the corresponding end 292A of the concave portion 29C by the pressing force of the inlet damper spring 43B. The top surface 440 of the convex portion 44B and the bottom surface 290 of the concave portion 29C gradually come closer to each other.

When the cap 4 reaches the open position, as illustrated in FIGS. 19 and 9, the convex portion 44B is pressed in the engagement direction by the inlet damper spring 43B with two inclined surfaces 441 contacting respective two ends 292A of the concave portion 29C. When the cap 4 is in the closed position, the outer peripheral surface 47 of the rotation supporting section 410B and the side surface 31D of the hood unit 23 keep facing each other in the radius direction without contacting each other. In this state, the top surface 440 of the convex portion 44B and the bottom surface 290 of the concave portion 29C are positioned closest to each other.

In the opening and closing structure 1E of the cap 4 and the charging connector 100 configured as described above, the inlet damper spring 43B biases the convex portion 44B in a manner separated from the side surface 31D facing the convex portion 44B in the non-engagement state between the convex portion 44B and the concave portion 29C. This configuration can prevent the convex portion 44B from contacting the side surface 31D of the hood unit 23 when the cap 4 is in the closed position and when the cap 4 is rotating. This configuration makes it possible to reduce abrasion of the convex portion 44B caused in contact with the side surface 31D sliding on the side surface 31D.

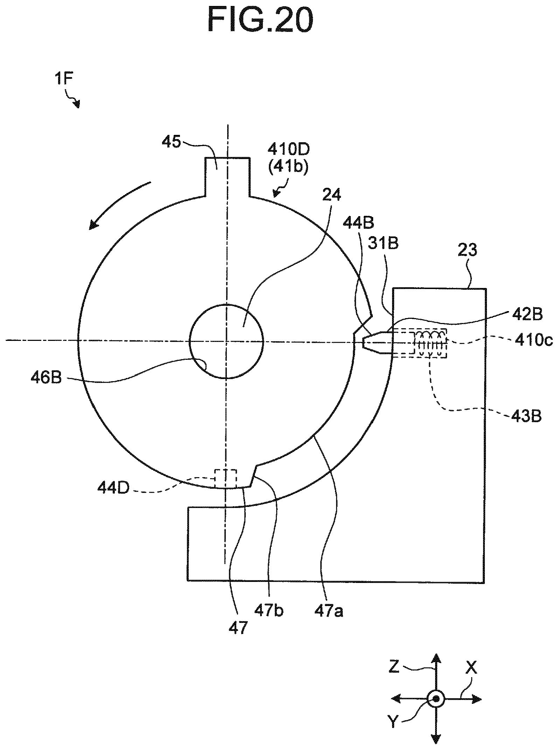

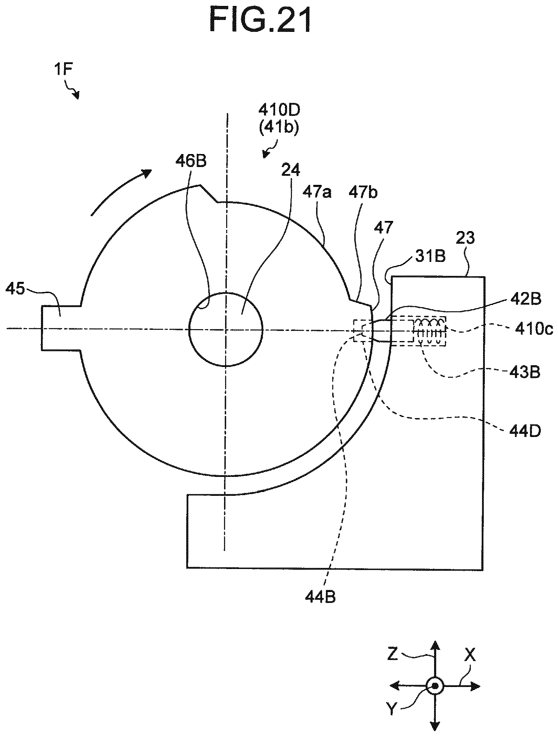

Each of FIGS. 20 and 21 is a schematic view that illustrates a schematic configuration of a cap opening and closing structure according to a second modification of the third embodiment. FIG. 20 illustrates a state with the cap in the closed position, whereas FIG. 21 illustrates a state with the cap in the open position.

An opening and closing structure 1F of the cap 4 according to the second modification of the third embodiment is different from the cap opening and closing structure in the third embodiment in that, as illustrated in FIGS. 20 and 21, the convex portion 44B is prevented from contacting the outer peripheral surface 47 of a rotation supporting section 410D when the cap 4 is in the closed position and when the cap 4 is rotating. For the opening and closing structure 1E of the cap 4 according to the first modification, the opening and closing structure 1F of the cap 4 according to the second modification has the setting positions of a structural unit including the convex portion 44B and a structural unit including a concave portion 44D replacing with each other.

In the housing 2, the hood unit 23 includes the side surface 31B, the accommodation unit 410c, the inlet damper spring 43B, and the inlet damper 42B. The side surface 31B is curved in a circular arc along the rotation direction of the rotation supporting section 410D of the cap 4 and faces the outer peripheral surface 47 of the rotation supporting section 410D. The side surface 31B is formed in a manner keeping facing the outer peripheral surface 47 of the rotation supporting section 410D while the cap 4 rotates. The side surface 31B and the outer peripheral surface 47 face each other in the radius direction of the rotation supporting section 410D.

The accommodation unit 410c opens from the side surface 31B of the hood unit 23 toward the rotation axis of the rotation supporting section 410D. The accommodation unit 410c accommodates the inlet damper spring 43B and the inlet damper 42B and locks them by a known configuration so as not to protrude outside. The accommodation unit 410c is configured such that the convex portion 44B of the inlet damper 42B projects from the side surface 31B by means of the pressing force of the inlet damper spring 43B.

The inlet damper spring 43B is provided between the hood unit 23 and the inlet damper 42B. The inlet damper spring 43B biases the inlet damper 42B toward the rotation axis of the rotation supporting section 410D and further biases the inlet damper 42B in an engagement direction in which the convex portion 44B and the concave portion 44D are engaged with each other in the open position of the cap 4. The engagement direction is a direction in which the convex portion 44B and the concave portion 44D can be engaged with each other in the open position of the cap 4.

The inlet damper 42B is movably supported in a direction toward the rotation axis of the rotation supporting section 410D with respect to the hood unit 23. The convex portion 44B is either a first engagement portion or a second engagement portion and projects from the side surface 31B of the hood unit 23.

In the cap 4, the rotation supporting section 410D is integrally configured with the rotation supporting section 41b. The rotation supporting section 410D is accommodated in the accommodation unit 41c of the rotation supporting section 41b. The rotation supporting section 410D includes the concave portion 44D, the rotation stop projection 45, the through-hole 46B, the outer peripheral surface 47, a partial outer peripheral surface 47a, and an inclined surface 47b.

The concave portion 44D is either a first engagement portion or a second engagement portion and opens outward from the outer peripheral surface 47 of the rotation supporting section 410D in the radius direction. The concave portion 44D is engaged with the convex portion 44B of the inlet damper 42B provided on the side surface 31B of the hood unit 23 in the open position of the cap 4.

The outer peripheral surface 47 is a surface facing the side surface 31B of the hood unit 23 in a position right before the open position of the cap 4 and in the open position of the cap 4. The outer peripheral surface 47 and the side surface 31B face each other in the radius direction of the rotation supporting section 410D. The outer peripheral surface 47 connects to at least the inner side surface 291 facing opposite to the rotation direction, of the two inner side surfaces 291 of the concave portion 44D. The partial outer peripheral surface 47a is curved in a circular arc at least from a position facing the convex portion 44B in the closed position to a position in front of the concave portion 44D along the rotation direction of the rotation supporting section 410D. The partial outer peripheral surface 47a and the side surface 31B are separated from each other in the radius direction of the rotation supporting section 410D from the open position toward the closed position in the rotation direction. Of the rotation directions, a direction from the open position toward the closed position is referred to as a closing direction, whereas a direction from the closed position toward the open position is referred as an opening direction. In other words, the partial outer peripheral surface 47a and the side surface 31B are separated from each other in the radius direction of the rotation supporting section 410D toward the closing direction. The partial outer peripheral surface 47a connects to the inclined surface 47b in front of the concave portion 44D. The inclined surface 47b is connected to the outer peripheral surface 47 in a manner gradually reducing the distance from the side surface 31B along the rotation direction. The distance between the outer peripheral surface 47 and the side surface 31B is smaller than a distance between the partial outer peripheral surface 47a and the side surface 31B.

The opening operation leading the cap from the closed position to the open position in the opening and closing structure 1F of the cap 4 will now be described. As illustrated in FIG. 20, the cap 4 and the housing 2 have the outer peripheral surface 47 of the rotation supporting section 410D and the side surface 31B of the hood unit 23 face each other in the radius direction in the closed position of the cap 4. The inlet damper 42B is pressed by the inlet damper spring 43B toward the rotation axis of the rotation supporting section 410D. The convex portion 44B of the side surface 31B and the concave portion 44D of the rotation supporting section 410D are in a non-engagement state. The non-engagement state is a state in which neither the pair of ends 292A of the concave portion 44D contacts two inclined surfaces 441 of the convex portion 44B. The convex portion 44B is pressed in the radius direction by the inlet damper spring 43B without contacting the partial outer peripheral surface 47a of the rotation supporting section 410D.

With the cap lock unit 28 releasing locking and the cap 4 starting rotating around the rotation axis from the closed position toward the open position by means of the pressing force of the torsion spring 3, the rotation supporting section 410D starts rotating around the rotation axis. While the cap 4 rotates, the outer peripheral surface 47 of the rotation supporting section 410D and the side surface 31B of the hood unit 23 keep facing each other. The convex portion 44B is separated from the concave portion 44D and remains in the non-engagement state without contacting or sliding on the partial outer peripheral surface 47a of the rotation supporting section 410D.

When the cap 4 comes closer to the open position, the convex portion 44B contacts the inclined surface 47b and slides thereon by the pressing force of the inlet damper spring 43B and starts engaging with the concave portion 44D. The convex portion 44B approaches the concave portion 44D with the top surface 440 sliding on the inclined surface 47b and the outer peripheral surface 47. The convex portion 44B starts engaging with the concave portion 44D with the inclined surface 441 facing opposite to the rotation direction sliding to the corresponding end 292A of the concave portion 44D by means of the pressing force of the inlet damper spring 43B. The top surface 440 of the convex portion 44B and the bottom surface 290 of the concave portion 44D gradually come closer to each other.

When the cap 4 reaches the open position, as illustrated in FIGS. 21 and 9, the convex portion 44B is pressed in the engagement direction by the inlet damper spring 43B with two inclined surfaces 441 contacting respective two ends 292A of the concave portion 44D. When the cap 4 is in the closed position, the outer peripheral surface 47 of the rotation supporting section 410D and the side surface 31B of the hood unit 23 keep facing each other in the radius direction without contacting each other. In this state, the top surface 440 of the convex portion 44B and the bottom surface 290 of the concave portion 44D are positioned closest to each other.

The opening and closing structure 1F of the cap 4 and the charging connector 100 configured as described above can obtain the same advantageous effects as those of the above-described cap opening and closing structure 1E.

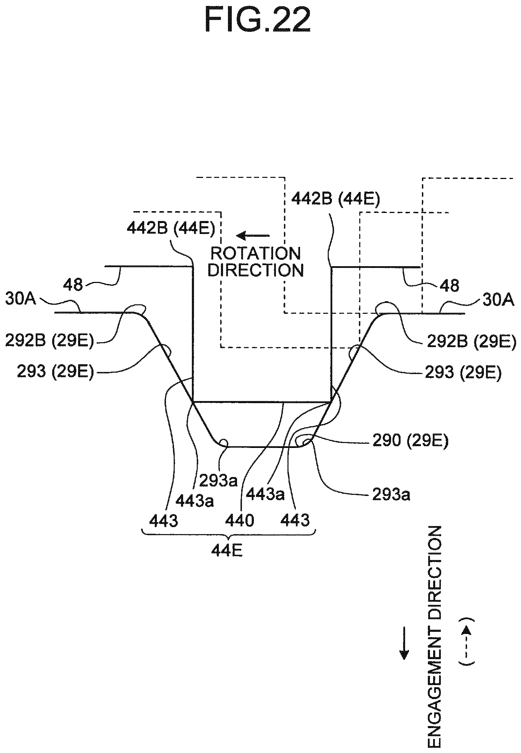

In the above-described first to fourth embodiments and the modifications, the convex portion has inclined surfaces, however, the embodiments are not limited to this configuration. The concave portion may have inclined surfaces. As an exemplary combination, as illustrated in FIG. 22, a convex portion 44E having no inclined surfaces and a concave portion 29E having inclined surfaces may be used as engagement portions. The convex portion 44E has the top surface 440, a pair of ends 443a, non-inclined two outer side surfaces 443, and a pair of ends 442B. The distance between the ends of the top surface 440 in the rotation direction, which is the distance between the pair of ends 443a, is the same as the distance between the pair of ends 442B. The concave portion 29E is configured with the bottom surface 290, a pair of closely located ends 293a, two inclined surfaces 293, and a pair of distanced ends 292B. The bottom surface 290 is formed between the closely located ends 293a closely facing each other in the rotation direction. The two inclined surfaces 293 each are formed in a manner stretching in the engagement direction from the closely located ends 293a disposed in respective ends of the bottom surface 290 in the rotation direction toward the pair of distanced ends 292B distantly facing each other in the rotation direction. In other words, the two inclined surfaces 293 are inclined in a manner widening from the bottom surface 290 toward the engagement direction (the direction in the dotted allow in FIG. 22). The two inclined surfaces 293 are formed such that the convex portion 44E is engaged with the concave portion 29E in the open position of the cap 4 with the bottom surface 290 not contacting the top surface 440.

In the above-described embodiments, the rotation supporting section 41b includes the inlet damper 42A having the convex portion 44A and the inlet damper spring 43A pressing the inlet damper 42A and is engaged with the concave portion 29A included in the first supporting unit 26A, however, the embodiments are not limited to this configuration. Instead of this configuration, the first supporting unit 26A may include an inlet damper having a convex portion and an inlet damper spring biasing the inlet damper and is engaged with a concave portion included in the rotation supporting section 41b. The concave portion may be provided on the rotation supporting section 41b side, whereas the convex portion may be provided on the first supporting unit 26A side.

In the above-described first to fourth embodiments and modifications, the cap opening and closing structure is applied to a vehicle charging connector. As another exemplary application, the cap opening and closing structure may be applied to a vehicle power supply connector. In this case, a dual-purpose connector may be used for power supply and charging or separate connectors may be used for respective purposes.

In the above-described first to fourth embodiments and modifications, the ends 292A and 442B are formed at a right angle, however, those ends may be chamfered.

In the above-described first to fourth embodiments and modifications, a pair of inclined surfaces of a convex portion or a concave portion is not limited to plane surfaces but may be symmetric spherical surfaces. For example, the convex portion may be hemispherical or may have a semicircle sectional surface.

In the fourth embodiment, the front end 44Ca has a cut surface facing toward the rotation direction side; however, the embodiment is not limited to this configuration. Another cut surface may be formed on the opposite side to the rotation direction side.

In the first and second modifications, the side surface 31Da may not be necessarily formed in a manner facing the outer peripheral surface 47 of the rotation supporting section 410B. The partial outer peripheral surface 47a is not necessarily formed in a manner facing the side surface 31B of the hood unit 23.

### Reference Signs List

1A, 1B, 1C, 1D, 1E, 1F CAP OPENING AND CLOSING

### STRUCTURE

- 2: HOUSING
- 3: TORSION SPRING
- 4: CAP
- 21: VEHICLE BODY INSTALLATION UNIT
- 21a: THROUGH-HOLE
- 22: HOUSING BODY
- 22a: OPENING
- 22b: CONNECTION PART
- 23: HOOD UNIT
- 24: HINGE PIN
- 25: CAP SUPPORTING UNIT
- 26A, 26B: FIRST SUPPORTING UNIT
- 26a, 46A, 46B: THROUGH-HOLE
- 27: SECOND SUPPORTING UNIT
- 27a: THROUGH-HOLE
- 28: CAP LOCK UNIT
- 29A, 29B, 29C, 29E, 44C, 44d: CONCAVE PORTION
- 29D, 44A, 44B, 44E: CONVEX PORTION
- 290: BOTTOM SURFACE
- 291: INNER SIDE SURFACES
- 293a, 441a: CLOSELY LOCATED END
- 290a, 292A, 442B, 443a: END
- 292B, 442A: DISTANCED END
- 293, 441: INCLINED SURFACE
- 30A, 30B, 31B, 31C, 31D, 31Da: SIDE SURFACE
- 31A, 47: OUTER PERIPHERAL SURFACE
- 41: CAP BODY
- 41a: COVER
- 41b, 410A, 410B, 410D: ROTATION SUPPORTING SECTION
- 41c, 410c: ACCOMMODATION UNIT
- 41d, 443: OUTER SIDE SURFACE
- 41e: ROTATION STOP UNIT
- 42A, 42B, 42C: INLET DAMPER
- 43A, 43B: INLET DAMPER SPRING
- 44Ca, 44Cb: FRONT ENDS
- 45: ROTATION STOP PROJECTION
- 440: TOP SURFACE
- 48: SURFACE
- 100: CHARGING CONNECTOR

## Claims

1. A cap opening and closing structure, comprising:
a housing that is provided with a connection part electrically connected with a connection object outside a vehicle through an opening;
a cap that is rotatably supported with respect to the housing in a rotation supporting section provided at an end, closes the opening in a closed position, and exposes the connection part outside the vehicle through the opening in an open position;
a first biasing member that biases the cap such that the cap rotates around a rotation axis heading to the open position from the closed position;
a pair of a first facing surface and a second facing surface that are formed on the housing and the cap, respectively, and keep facing each other while the cap rotates;
a first engagement portion and a second engagement portion that are provided on the first facing surface and the second facing surface, respectively; and
a second biasing member that biases one of the first engagement portion and the second engagement portion in an engagement direction where the one engagement portion and the other engagement portion are capable of being engaged with each other in the open position, wherein
one of the first engagement portion and the second engagement portion has a convex portion, and the other engagement portion has a concave portion with which the convex portion is engaged by the second biasing member in the open position,
at least one of the convex portion and the concave portion has two inclined surfaces facing each other in a rotation direction, and
the two inclined surfaces are formed in a manner stretching in the engagement direction from closely located ends closely facing each other toward distanced ends distantly facing each other of the convex portion and the concave portion in the open position.

2. The cap opening and closing structure according to claim 1, wherein
the two inclined surfaces are formed such that the convex portion is engaged with the concave portion with the closely located ends kept in a non-contact state in the open position.

3. The cap opening and closing structure according to claim 1 or 2, wherein
the first facing surface and the second facing surface face each other in a rotation axis,
one of the engagement portions is movably supported with respect to the rotation supporting section in a rotation axis direction, and
the second biasing member is provided between one of the engagement portions and the rotation supporting section and biases the one engagement portion toward the second facing surface side of the rotation axis direction.

4. The cap opening and closing structure according to claim 1 or 2, wherein
the first facing surface and the second facing surface face each other in a radius direction of the rotation supporting section,
one of the engagement portions is movably supported with respect to the rotation supporting section in the radius direction, and
the second biasing member is provided between one of the engagement portions and the rotation supporting section or the housing and biases the one engagement portion toward the first facing surface side or the second facing surface side of the radius directions.

5. The cap opening and closing structure according to any one of claims 1 to 4, wherein
in a non-engagement state between the first engagement portion and the second engagement portion, the second biasing member brings one of the engagement portions into contact with the facing surface facing the engagement portion.

6. The cap opening and closing structure according to claim 5, wherein
the first facing surface and the second facing surface are separated from each other in the radius direction of the rotation supporting section from the open position toward the closed position in the rotation direction.

7. A charging connector comprising:
the cap opening and closing structure according to any one of claims 1 to 6; and
a connection part electrically connected with a charging connector outside a vehicle.
